# DEMANDE DE BREVET EUROPEEN

(11) **EP 4 174 367 A1**
(43) Date de publication de la demande: **03.05.2023**
(21) Numéro de dépôt: 22204358.0
(22) Date de dépôt: 28.10.2022
(51) Int. Cl.: F21S 43/14, F21S 43/27, F21S 43/237, F21V 8/00, F21S 43/19, F21K 9/61, G02B 6/00, G02B 6/42

(54) **MODULE OPTIQUE D'UN DISPOSITIF LUMINEUX D'UN VÉHICULE AUTOMOBILE**

(30) Priorité: 29.10.2021 FR 2111526; 31.12.2021 FR 2114710
(71) Demandeur: Valeo Vision, 93012 Bobigny Cedex (FR)
(72) Inventeur: DE LAMBERTERIE, Antoine, 93012 Bobigny (FR); DELANDE, Benoit, 93012 Bobigny (FR); FRANC, Alexandre, B-7822 Meslin l'Eveque (BE)
(74) Mandataire: Valeo Visibility

(57) **Abrégé**

L'invention porte sur un module optique (1) d'un dispositif lumineux d'un véhicule automobile, comportant une première source lumineuse (10) montée sur une première platine (100), un guide de lumière (11) diffusant comportant une première face de couplage (110) apte à recevoir des rayons lumineux, un premier capot (12) définissant un logement (120) dans lequel est agencée la première platine (100) et comportant un orifice (1210) au travers duquel passe le guide de lumière (11), un premier organe de concentration (13) disposé en vis-à-vis de la première source lumineuse (10) et comportant une portion de concentration (130) agencée pour concentrer les rayons lumineux en direction de la première face de couplage (110) du guide de lumière (11), et une cloison (131) s'étendant dans le logement (120) entre la portion de concentration (130) et le premier capot (12), le premier organe de concentration (13) formant une pièce unique.

## Description

### Domaine technique.

L'invention se rapporte au domaine technique des guides de lumière pour véhicule. Elle trouve une application particulière mais non limitative dans les véhicules automobiles.

### Etat de la technique.

Dans le domaine de l'éclairage et/ou de la signalisation automobile, il est connu des dispositifs lumineux employant un guide de lumière. Ce guide de lumière présente de façon classique une face de couplage en vis-à-vis de laquelle est agencée une source lumineuse et un corps s'étendant depuis la face de couplage dans lequel se propage, par réflexion interne totale contre les parois de ce corps, la lumière émise par la source lumineuse étant couplée au guide de lumière via la face de couplage. Des éléments diffusants sont généralement prévus le long du corps pour permettre le découplage de la lumière s'y propageant vers l'extérieur du guide. Ce guide de lumière permet ainsi de réaliser des fonctions lumineuses, notamment de signalisation lumineuse comme un feu diurne, un feu de position ou un indicateur de direction, tout en offrant une grande marge de manœuvre en terme d'esthétisme.

Un tel guide de lumière présente toutefois plusieurs inconvénients.

D'une part, la source lumineuse émet de la lumière selon un cône d'émission dont l'angle d'ouverture est généralement beaucoup plus important que le diamètre de la face de couplage du guide de lumière. Une large partie de la lumière émise par la source lumineuse n'est donc pas couplée au guide de lumière, ce qui induit une perte de rendement du dispositif lumineux.

D'autre part, la source lumineuse est généralement disposée proche, voire au contact, de la face de couplage du guide de lumière. Or, la source lumineuse peut dissiper de la chaleur, du fait de son fonctionnement, laquelle est donc dirigée vers la face de couplage du guide de lumière. Dès lors, compte tenu des matériaux employés pour réaliser le guide de lumière, cette chaleur peut venir endommager la face de couplage, au fur et à mesure des cycles de fonctionnement du dispositif lumineux.

Enfin, dans les dispositifs lumineux connus, les guides de lumière sont généralement placés derrière une glace de protection, laquelle permet notamment de garantir l'étanchéité de l'intérieur du dispositif lumineux. Toutefois, dans les dispositifs lumineux modernes, cette glace de protection a tendance à être effacée. Dès lors, il existe un risque que de l'eau s'infiltre dans le dispositif lumineux jusqu'à la source lumineuse, ce qui pourrait la détériorer.

Ces inconvénients sont particulièrement perceptibles lorsque le guide de lumière est un guide de lumière de type fibre optique diffusante, munie d'un cœur entourée d'une gaine.

L'invention se place donc dans ce contexte et cherche à résoudre l'ensemble des inconvénients précités. Ainsi, l'invention cherche à proposer un module optique employant une source lumineuse et un guide de lumière, qui soit résistant à la chaleur dissipée par la source lumineuse, dont le rendement soit optimal et qui garantisse une bonne étanchéité de la source lumineuse, y compris lorsqu'aucune glace de protection n'est prévue devant le guide de lumière.

### Présentation de l'invention.

L'invention a pour objet un module optique d'un dispositif lumineux d'un véhicule automobile, comportant une première source lumineuse montée sur une première platine, un guide de lumière diffusant comportant une première face de couplage apte à recevoir des rayons lumineux émis par la première source lumineuse, un premier capot définissant un logement dans lequel est agencée la première platine et comportant un orifice au travers duquel passe le guide de lumière, un premier organe de concentration disposé en vis-à-vis de la première source lumineuse et comportant une portion de concentration agencée pour concentrer les rayons lumineux émis par la première source lumineuse en direction de la première face de couplage du guide de lumière, et une cloison s'étendant dans le logement entre la portion de concentration et le premier capot, le premier organe de concentration formant une pièce unique.

Selon l'invention, la portion de concentration permet de réduire sensiblement l'ouverture numérique de l'angle des rayons lumineux émis par la source lumineuse, de sorte qu'une majeure partie des rayons lumineux émis par cette source lumineuse soit couplée au guide de lumière via la face de couplage. On améliore ainsi le rendement du module optique. En outre, la portion de concentration permet de déporter la source lumineuse vis-à-vis de la face de couplage du guide de lumière, de sorte que la chaleur dissipée par la source lumineuse soit dirigée vers la portion de concentration, et non vers cette face de couplage, laquelle ne subit donc sensiblement aucune détérioration du fait de cette chaleur. Enfin, la cloison permet de définir une séparation étanche dans le logement entre le guide de lumière et la source lumineuse, de sorte qu'il est pratiquement impossible que de l'eau s'infiltre depuis l'extérieur du capot, via l'orifice de passage du guide de lumière, dans le logement du côté de la source lumineuse. Le fait que la cloison et la portion de concentration forme une pièce unique permet de simplifier la conception de l'organe de concentration sans impacter les performances optiques de la portion de concentration, les rayons lumineux concentrés par la portion de concentration traversant ainsi la cloison sans être déviés.

La première platine sur laquelle est montée la première source lumineuse peut comporter une première carte de circuit imprimé. La première source lumineuse peut être une source lumineuse à semi-conducteur. Dans un autre mode de réalisation, ladite première source lumineuse à semi-conducteur fait partie d'une diode électroluminescente. Par diode électroluminescente, on entend tout type de diodes électroluminescentes, que ce soit dans des exemples non limitatifs des LED (« Light Emitting Diode »), des OLED (« organic LED »), des AMOLED (Active-Matrix-Organic LED), ou encore des FOLED (Flexible OLED). La première source lumineuse peut être disposée sur un support électronique montée sur la première carte de circuit imprimé.

Le module lumineux comportant le guide de lumière peut être configuré pour réaliser une fonction d'éclairage et/ou de signalisation ou une fonction d'éclairage intérieur. Par guide de lumière on comprend dans la présente demande une pièce optique apte à guider de la lumière par réflexions internes totales successives de cette lumière sur une ou plusieurs parois périphériques de cette pièce, depuis la première face de couplage vers une zone de sortie du guide de lumière, par exemple formée par une portion, voire la totalité, de la ou des parois périphériques. Le guide de lumière peut notamment être un élément sensiblement cylindrique. La section dudit élément tubulaire peut présenter un contour de forme, par exemple et de manière non limitative, circulaire, carrée, rectangulaire, triangulaire, ou encore un assemblage de portions courbes et/ou rectilignes. Ladite section peut par ailleurs varier en taille et/ou en forme le long du profil longitudinal dudit guide de lumière. En variante, la section peut être constante le long du guide de lumière.

Avantageusement, le premier capot comporte un ensemble de parois latérales jointes entre elles par une paroi supérieure dans laquelle est ménagé ledit orifice, lesdites parois latérales et supérieure définissant le logement, la cloison s'étendant dans le logement en étant jointive avec chacune des parois latérales.

La cloison peut comporter une forme plane. Le cas échéant, le premier capot peut présenter une portion tubulaire au bout de laquelle est prévu ledit orifice, le guide de lumière étant agencée dans ladite portion tubulaire, et un corps à partir duquel s'étendant ladite portion tubulaire et dans lequel cette portion tubulaire débouche, le corps présentant lesdites parois latérales et supérieure et définissant le logement du capot, ladite cloison s'étendant dans le corps.

La cloison peut être montée contre la paroi supérieure du premier capot en étant jointive avec l'ensemble des parois latérales dudit premier capot. On s'assure ainsi que ladite cloison définisse une paroi étanche dans le logement séparant d'un côté l'extérieur du module optique, notamment du côté de la portion tubulaire du capot, et de l'autre côté, la source lumineuse, notamment du côté du corps du capot..

Avantageusement, le premier organe de concentration est réalisé, notamment intégralement, en silicone.

Dans un autre mode de réalisation, le premier organe de concentration peut être réalisé en polycarbonate (PC). Dans un autre mode de réalisation, la portion de concentration peut être réalisée dans un premier matériau, et la cloison peut être réalisée dans un deuxième matériau distinct, notamment par surmoulage de la cloison sur la portion de concentration, ou inversement.

Avantageusement, le guide de lumière diffusant comporte un cœur entouré d'une gaine, le cœur et la gaine étant agencés pour que des rayons lumineux pénétrant dans le guide de lumière diffusant par la première face de couplage se propagent dans le cœur par réflexion totale interne sur un dioptre formé par le cœur et la gaine ; et une pluralité d'organes de diffusion agencés pour diffuser les rayons lumineux se propageant dans le cœur vers l'extérieur de la gaine. La gaine peut avoir un rôle de protection du cœur et/ou un rôle optique en permettant de guider une partie de la lumière et de former l'interface avec le cœur de manière à faciliter l'extraction d'une partie des rayons lumineux au niveau de chacun des organes de diffusion. De préférence, l'indice de réfraction de la gaine pourra être inférieur à l'indice de réfraction du cœur pour permettre de garantir un guidage de la lumière par réflexion interne totale.

Le guide de lumière peut être composé d'un cœur unique encapsulé dans une seule gaine, ou un bouquet de plusieurs cœur encapsulés dans une seule gaine. L'interface cœur /gaine peut former un dioptre contre lequel les rayons lumineux se propageant dans le cœur sont réfléchis par réflexion interne totale. Le cœur du guide de lumière peut être extrudé dans un matériau tel que du verre ou un matériau plastique de type polymétacrylate de méthyle (PMMA) ou polycarbonate (PC).

Le guide de lumière peut comporter une pluralité d'organes de diffusion sur l'ensemble du dioptre dudit guide de lumière. Ainsi, les organes de diffusion sont prévus ou formés sur tout ou partie du pourtour dudit dioptre du guide de lumière, permettant une diffusion des rayons lumineux circulant dans le guide de lumière à 360° dans toutes les directions. Les organes de diffusion peuvent comporter des irrégularités sur une surface externe du cœur ou sur une surface interne de la gaine, ces irrégularités étant par exemple obtenues par abrasion, par sable ou par impact laser. Dans un autre mode de réalisation, les organes de diffusion peuvent être agencés ou formés dans le cœur et peuvent comporter une particule diffusante montée dans le cœur au niveau du dioptre.

Dans un mode de réalisation non limitatif, le guide de lumière est gainé sur l'ensemble de sa longueur à l'exception d'une extrémité adaptée pour coopérer avec le premier organe de concentration, au niveau de la première face de couplage.

Avantageusement, la portion de concentration est une portion présentant une face d'entrée agencée en vis-à-vis de la première source lumineuse et une zone de jonction avec la cloison, ladite portion s'évasant depuis la face d'entrée vers la zone de jonction.

La face d'entrée de la portion de concentration peut présenter une forme carrée, ronde ou rectangulaire, adaptée à la forme de la première source lumineuse. Le fait d'adapter la face d'entrée de la portion de concentration à la forme de la première source lumineuse peut permettre d'optimiser l'entrée des rayons lumineux émis par ladite source lumineuse dans l'organe de concentration.

La zone de jonction de la portion de concentration avec la cloison peut présenter un profil sensiblement identique à la section du guide de lumière et le cas échéant, un profil sensiblement identique à la section du cœur du guide de lumière. Cette section peut permettre de garantir une bonne optimisation de la quantité de rayons pénétrant dans le guide de lumière.

Le fait que la portion de concentration s'évase depuis la face d'entrée vers la zone de jonction, peut permettre une réflexion totale interne des rayons lumineux, émis par la source lumineuse et pénétrant dans ladite portion de concentration via la face d'entrée, sur une ou plusieurs parois périphériques de la portion de concentration s'étendant entre ladite face d'entrée et ladite zone de jonction, pour concentrer ces rayons lumineux émis par la source lumineuse vers la zone de jonction.

Avantageusement, le premier organe de concentration comporte une portion de couplage s'étendant dans le logement entre la cloison et la première face de couplage du guide de lumière, la portion de couplage étant agencée pour dévier les rayons lumineux issus de la portion de concentration vers la première face de couplage du guide de lumière.

La portion de couplage peut être en prévue en vis-à-vis de la portion de concentration du premier organe de concentration, la portion de couplage et la portion de concentration étant séparées par la cloison. La portion de couplage peut être agencée pour être en vis-à-vis de la première face de couplage du guide de lumière.

Avantageusement, la portion de couplage est une portion présentant une zone de jonction avec la cloison et une face de sortie agencée en vis-à-vis de la première face de couplage du guide de lumière, ladite portion présentant une forme sensiblement cylindrique.

Les dimensions de la surface d'entrée de la portion de concentration et les dimensions de la surface de sortie de la portion de couplage peuvent être différentes.

La face de sortie de la portion de couplage peut notamment présenter une forme et des dimensions sensiblement identiques à celles de la première face de couplage.

Avantageusement, la cloison du premier organe de concentration comporte au moins un élément de positionnement et la première platine comporte un premier élément de positionnement complémentaire agencé pour coopérer avec l'élément de positionnement de sorte que la première source lumineuse soit positionnée en vis-à-vis de la portion de concentration.

L'élément de positionnement peut être un pion. L'élément de positionnement complémentaire peut être un orifice traversant la première platine ou un orifice borgne, ledit orifice ayant des dimensions sensiblement supérieure à celles de l'élément de positionnement, de sorte que l'élément de positionnement puisse être inséré dans l'élément de positionnement complémentaire.

Avantageusement, le module optique comporte un premier dissipateur de chaleur sur lequel est montée ladite première platine, le premier dissipateur étant fixé au premier capot en étant agencé pour fermer le logement.

Le premier dissipateur de chaleur peut comporter une pluralité d'ailettes de dissipation. Le premier dissipateur de chaleur peut être configuré pour refroidir la première source lumineuse ainsi que la première platine.

Le premier dissipateur de chaleur peut être fixé au premier capot par encliquetage, des clips étant prévus sur un rebord du premier capot agencés pour coopérer avec un rebord dudit premier dissipateur.

Avantageusement, le premier dissipateur de chaleur comporte un deuxième élément de positionnement complémentaire venant en vis-à-vis du premier élément de positionnement complémentaire de la première platine et agencé pour coopérer avec l'élément de positionnement de la cloison.

Le deuxième élément de positionnement complémentaire peut être un orifice, traversant ou borgne, ménagé dans le premier dissipateur de chaleur. Le deuxième élément de positionnement complémentaire, le premier élément de positionnement complémentaire et l'élément de positionnement peuvent être adaptés pour coopérer ensemble. Ainsi la première platine, la cloison et le premier dissipateur sont alignés et positionnés de manière optimale par rapport au logement du premier capot.

Avantageusement, le module optique comporte une deuxième source lumineuse montée sur une deuxième platine, le guide de lumière diffusant comportant une deuxième face de couplage apte à recevoir des rayons lumineux émis par la deuxième source lumineuse. Le cas échéant, le module optique comporte un deuxième capot définissant un logement dans lequel est agencée la deuxième platine et comportant un orifice au travers duquel passe le guide de lumière et un deuxième organe de concentration disposé en vis-à-vis de la deuxième source lumineuse, le deuxième organe de concentration comportant une portion de concentration agencée pour concentrer les rayons lumineux émis par la deuxième source lumineuse en direction de la deuxième face de couplage du guide de lumière, et une cloison s'étendant dans le logement du deuxième capot entre la portion de concentration du deuxième organe de concentration et le deuxième capot, le deuxième organe de concentration formant une pièce unique.

La deuxième face de couplage peut être positionnée à l'opposé de la première face de couplage dudit guide de lumière et peut être sensiblement identique à la première face de couplage. La deuxième face de couplage peut être positionnée en vis-à-vis de la deuxième source lumineuse.

Le deuxième capot peut être sensiblement identique au premier capot, la deuxième platine peut être sensiblement identique à la première platine, le deuxième organe de concentration peut être sensiblement identique au premier organe de concentration.

Les éléments décrits précédemment sont applicables et transposables à l'ensemble de ces éléments.

Un autre aspect de l'invention concerne un dispositif lumineux d'un véhicule automobile comportant au moins un module optique selon l'invention.

Le dispositif lumineux peut comprendre le guide de lumière le premier capot et le deuxième capot tels que décrits précédemment.

### Brève description des figures.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :
[Fig. 1] représente schématiquement une vue en coupe d'un module lumineux selon un mode de réalisation.
[Fig. 2] représente schématiquement une vue externe de profil d'une portion d'un module lumineux selon un mode de réalisation.
[Fig. 3] représente schématiquement une vue externe inférieure d'une portion d'un module lumineux selon un mode de réalisation.
[Fig. 4] représente schématiquement un module lumineux comportant selon un autre mode de réalisation.
[Fig. 5] représente schématiquement une vue en coupe d'un module lumineux selon un autre mode de réalisation.

Dans la description qui suit, les éléments identiques, par structure ou par fonction, apparaissant sur différentes figures conservent, sauf précision contraire, les mêmes références.

### Description des modes de réalisation.

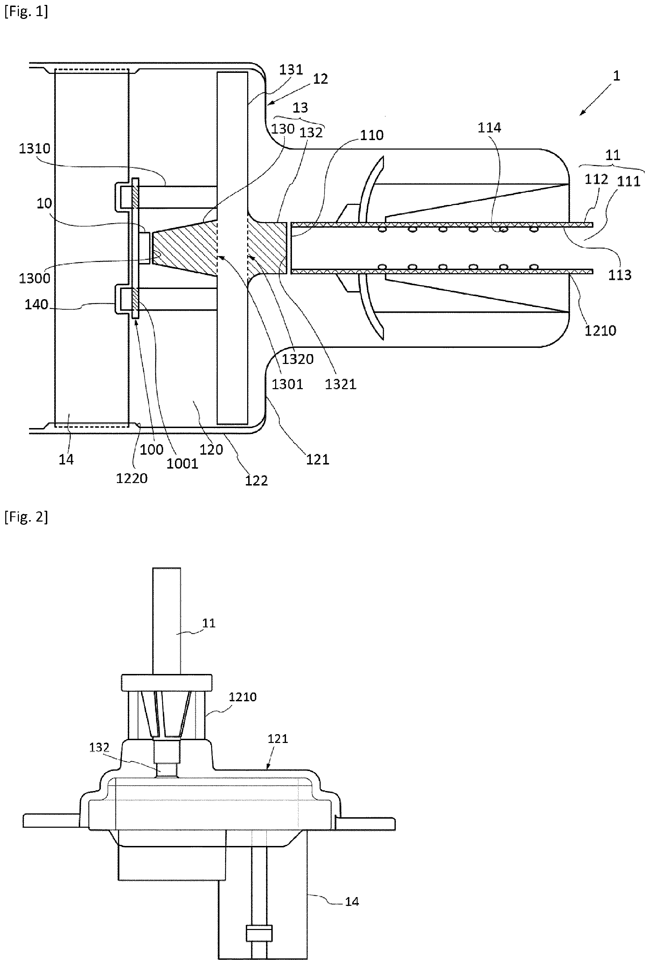

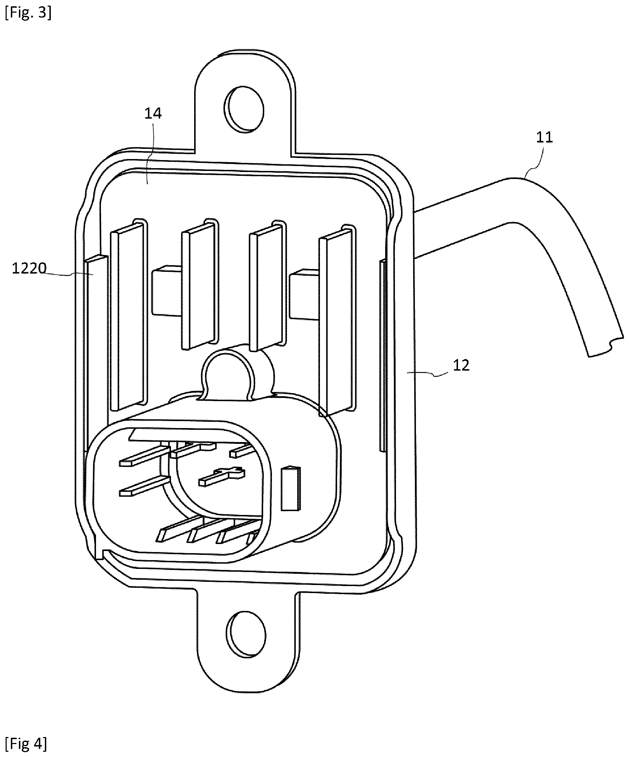

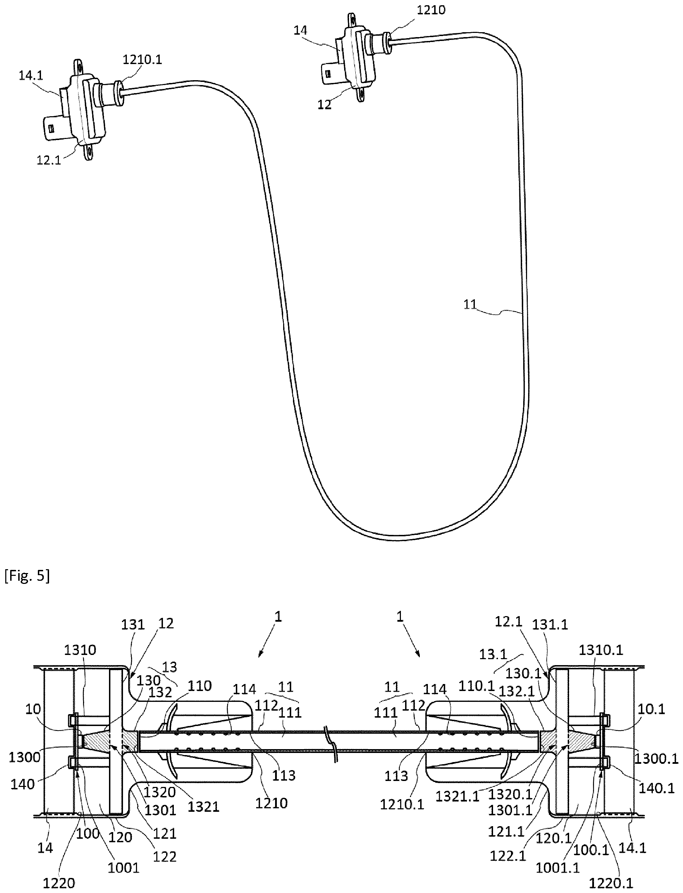

On a représenté en [Fig. 1] une vue en coupe d'un module lumineux 1 d'un dispositif lumineux pour véhicule automobile selon un mode particulier de réalisation de l'invention. Ce module lumineux 1 est décrit en lien avec les [Fig. 2] et [Fig. 3]. La [Fig. 4] présente un dispositif lumineux comportant une pluralité de modules lumineux décrits en [Fig. 1].

Les [Fig. 1], [Fig. 2] et [Fig. 3] décrivent un module optique 1 d'un dispositif lumineux d'un véhicule automobile. Le module optique 1 comporte un premier capot 12. Le premier capot 12 comporte un ensemble de parois latérales 122 jointes entre elles par une paroi supérieure 121 dans laquelle est ménagé un orifice 1210, lesdites parois latérales 122 et supérieure 121 définissant un logement 120.

Dans l'exemple décrit, le premier capot 12 présente une portion tubulaire au bout de laquelle est prévu ledit orifice 1210, et un corps à partir duquel s'étend ladite portion tubulaire et dans lequel cette portion tubulaire débouche, le corps présentant lesdites parois latérales 122 et supérieure 121 et définissant le logement 120 du capot 12, ladite cloison 131 s'étendant dans le corps.

Le module lumineux 1 comporte un guide de lumière 11 pourvu d'une face de couplage 110, une portion dudit guide de lumière 11, terminée par cette face de couplage 110, traversant l'orifice 1210 pour être agencée dans ladite portion tubulaire.

Le module lumineux 1 comporte une première platine 100 agencée dans le corps du logement 120. La première platine 100 est une carte de circuit imprimée sur laquelle est montée une première source lumineuse 10.

Le module optique 1 comporte un premier organe de concentration 13 disposé dans le logement 120, en vis-à-vis de la première source lumineuse 10, de manière que les rayons lumineux émis par ladite première source lumineuse 10 puissent être émis en direction dudit premier organe de concentration 13. Le module optique 1 comporte une cloison 131 s'étendant dans le logement 120 en définissant une séparation étanche entre le guide de lumière 11 et la source lumineuse 10, de sorte qu'il est pratiquement impossible que de l'eau s'infiltre depuis l'extérieur du capot 12, via l'orifice 1210 de passage du guide de lumière 11, dans le logement 120 du côté de la source lumineuse 10. A ces fins, la cloison 131 est montée contre la paroi supérieure 121 du premier capot 12 en étant jointive avec l'ensemble des parois latérales 122 dudit premier capot 12.

Le premier organe de concentration 13 comporte une portion de concentration 130 et une portion de couplage 132. Le premier organe de concentration 13 est agencé de sorte que la portion de concentration 130 et la portion de couplage 132 soient séparées par ladite cloison 131.

La portion de concentration 130 est adaptée pour recevoir lesdits rayons lumineux et les concentrer vers la portion de couplage 132 et la face de couplage 110 du guide de lumière 11. Cette portion de concentration 130 réduit donc l'angle d'ouverture du cône lumineux émis par la source lumineuse 10.

A ces fins, la portion de concentration 130 présente une face d'entrée 1300 agencée en vis-à-vis de la première source lumineuse 10 et une zone de jonction 1301 avec la cloison 131, ladite portion de concentration 130 s'évasant depuis la face d'entrée 1300 vers la zone de jonction 1301. La face d'entrée 1300 présente une forme adaptée à la forme de la source lumineuse 10. Le fait que la portion de concentration 130 s'évase depuis la face d'entrée 1300 vers la zone de jonction 1301, entraine une réflexion totale interne des rayons lumineux, émis par la première source lumineuse 10 et pénétrant dans ladite portion de concentration 130 via la face d'entrée 1300, sur une ou plusieurs parois périphériques de la portion de concentration 130 s'étendant entre ladite face d'entrée 1300 et ladite zone de jonction 1301 pour concentrer les rayons lumineux émis par la source lumineuse 10 vers la zone de jonction 1301.

En outre, la portion de concentration 130 déporte la première source lumineuse 10 vis-à-vis de la face de couplage 110 du guide de lumière 11, de sorte que la chaleur dissipée par la source lumineuse 10 soit dirigée vers ladite portion de concentration 130, et non vers cette face de couplage 110.

Le premier organe de concentration 13 comporte une portion de couplage 132 s'étendant dans le logement 120 entre la cloison 131 et un guide de lumière 11, la portion de couplage 132 étant agencée pour dévier les rayons lumineux issus de la portion de concentration 130 vers ledit guide de lumière 11.

La portion de couplage 132 présente une zone de jonction 1320 avec la cloison 131 et une face de sortie 1321, ladite portion de couplage 132 présentant une forme sensiblement cylindrique.

Les rayons lumineux émis par la source lumineuse 10 pénètrent donc dans le premier organe de concentration 13 par la face d'entrée 1300 de la portion de couplage 130, sont concentrés par la portion de couplage 130, traversent la cloison 131 de la zone de jonction 1301 jusqu'à la zone de jonction 1320, puis la portion de couplage 132 jusqu'à la face de sortie 1321 de cette portion de couplage 132, par laquelle ils sortent du premier organe de concentration 13 pour ensuite pénétrer dans le guide de lumière 11 via la face de couplage 110.

Le guide de lumière 11 est un élément sensiblement cylindrique dont la section est sensiblement constante le long dudit guide de lumière 11.

La face de couplage 110 du guide de lumière 11 présente un profil sensiblement identique à celui de la zone de jonction 1301 de la portion de concentration 130 et un profil sensiblement identique à celui de la face de sortie 1321. Le guide de lumière 11 est agencé de sorte que sa face de couplage 110 soit en vis-à-vis de la face de sortie 1321 de la portion de couplage 132. La face de couplage 110 peut ainsi recevoir une majeure partie, voire la totalité des rayons lumineux émis par la première source lumineuse 10 .

Le guide de lumière 11 diffusant comporte un cœur 111 entouré d'une gaine 112, le cœur 111 et la gaine 112 étant agencés pour que des rayons lumineux pénétrant dans le guide de lumière 11 diffusant par la face de couplage 110 se propagent dans le cœur 111 par réflexion interne totale sur un dioptre 113 formé à la jonction du cœur 111 et de la gaine 112. Le guide de lumière 11 comporte une pluralité d'organes de diffusion 114 sur l'ensemble du dioptre 113 dudit guide de lumière 11. Les organes de diffusion 114 sont formés sur tout ou partie du pourtour dudit dioptre 113 du guide de lumière 11, pour une diffusion des rayons lumineux circulant dans le guide de lumière 11 à 360° dans toutes les directions.

Le module optique 1 comporte un premier dissipateur de chaleur 14 sur lequel est montée ladite première platine 100, le premier dissipateur 14 étant fixé au premier capot 12 en étant agencé pour fermer le logement 120. Le premier dissipateur de chaleur 14 peut comporter une pluralité d'ailettes de dissipation. Le premier dissipateur de chaleur 14 peut être configuré pour refroidir la première source lumineuse 10 ainsi que la première platine 100. Le premier capot 12 comporte des clips 1220 prévus sur un rebord d'une des parois latérales 122 dudit capot 12, le premier dissipateur de chaleur 14 étant fixé au premier capot 12 par encliquetage.

La cloison 131 du premier organe de concentration 13 comporte au moins un élément de positionnement 1310. Ledit élément de positionnement 1310 étant un pion. La première platine 100 comporte un premier élément de positionnement complémentaire 1001. Ledit premier élément de positionnement complémentaire 1001 est un orifice traversant la première platine ledit orifice ayant des dimensions sensiblement supérieure à celles de l'élément de positionnement 1310 et agencé pour coopérer avec celui-ci.

Le premier dissipateur de chaleur 14 comporte un deuxième élément de positionnement complémentaire 140. Ledit deuxième élément de positionnement complémentaire 140 est un orifice traversant le premier dissipateur de chaleur et venant en vis-à-vis du premier élément de positionnement complémentaire 1001 de la première platine 100 et agencé pour coopérer avec l'élément de positionnement 1310 de la cloison 131.

Le deuxième élément de positionnement complémentaire 140, le premier élément de positionnement complémentaire 1001 et l'élément de positionnement 1310 peuvent être adaptés pour coopérer ensemble. Ainsi la première platine 100, la cloison 131 et le premier dissipateur 14 sont alignés et positionnés de manière optimale par rapport au premier logement 120 du premier capot 12.

Dans le mode de réalisation décrit en [Fig. 4], le module optique 1 comporte la première source lumineuse 10 montée sur la première platine 100, le guide de lumière 11 diffusant comportant la première face de couplage 110 apte à recevoir les rayons lumineux émis par la première source lumineuse 10, le premier capot 12 définissant le logement 120 dans lequel est agencée la première platine 100 et comportant l'orifice 1210 au travers duquel passe le guide de lumière 11, le premier organe de concentration 13 disposé en vis-à-vis de la première source lumineuse 10 et comportant la portion de concentration 130 agencée pour concentrer les rayons lumineux émis par la première source lumineuse 10 en direction de la première face de couplage 110 du guide de lumière 11, et la cloison 131 s'étendant dans le logement 120 entre la portion de concentration 130 et le premier capot 12, le premier organe de concentration 13 formant une pièce unique.

Dans ce mode de réalisation décrit en [Fig. 4] et en [Fig. 5], ledit module optique 1 comporte également une deuxième source lumineuse 10.1 montée sur une deuxième platine100.1, en ce que le guide de lumière diffusant 11 comporte une deuxième face de couplage 110.1 apte à recevoir des rayons lumineux émis par la deuxième source lumineuse 10.1, en ce qu'il comporte un deuxième capot 12.1 définissant un logement 120.1 dans lequel est agencée la deuxième platine 100.1 et comportant un orifice 1210.1 au travers duquel passe le guide de lumière 11 et en ce qu'il comporte un deuxième organe de concentration 13.1 disposé en vis-à-vis de la deuxième source lumineuse 10.1 et comportant une portion de concentration 130.1 agencée pour concentrer les rayons lumineux émis par la deuxième source lumineuse 10.1 en direction de la deuxième face de couplage 110.1 du guide de lumière 11, et une cloison 131.1 s'étendant dans le logement 120.1 entre la portion de concentration 130.1 et le deuxième capot 12.1, le deuxième organe de concentration 13.1 formant une pièce unique.

La deuxième face de couplage 110.1 étant positionnée à l'opposé de la première face de couplage 110 dudit guide de lumière 11 et peut être sensiblement identique à la première face de couplage 110. La deuxième face de couplage 110.1 peut être positionnée en vis-à-vis de la deuxième source lumineuse 10.1.

Le deuxième capot 12.1 est sensiblement identique au premier capot 12, la deuxième platine 100.1 est sensiblement identique à la première platine 10, le deuxième organe de concentration 13.1 est sensiblement identique au premier organe de concentration 13.

La description qui précède explique clairement comment l'invention permet d'atteindre les objectifs qu'elle s'est fixée, à savoir proposer un module optique employant une source lumineuse et un guide de lumière, qui soit résistant à la chaleur dissipée par la source lumineuse, dont le rendement soit optimal et qui garantisse une bonne étanchéité de la source lumineuse, y compris lorsqu'aucune glace de protection n'est prévue devant le guide de lumière, en proposant un module optique d'un dispositif lumineux d'un véhicule automobile, comportant une première source lumineuse montée sur une première platine, un guide de lumière diffusant comportant une première face de couplage apte à recevoir des rayons lumineux émis par la première source lumineuse, un premier capot définissant un logement dans lequel est agencée la première platine et comportant un orifice au travers duquel passe le guide de lumière, un premier organe de concentration disposé en vis-à-vis de la première source lumineuse et comportant une portion de concentration agencée pour concentrer les rayons lumineux émis par la première source lumineuse en direction de la première face de couplage du guide de lumière, et une cloison s'étendant dans le logement entre la portion de concentration et le premier capot, le premier organe de concentration formant une pièce unique.

En tout état de cause, l'invention ne saurait se limiter aux modes de réalisation spécifiquement décrits dans ce document, et s'étend en particulier à tous moyens équivalents et à toute combinaison techniquement opérante de ces moyens.

## Revendications

1. Module optique (1) d'un dispositif lumineux d'un véhicule automobile, comportant :
a. Une première source lumineuse (10) montée sur une première platine (100),
b. un guide de lumière (11) diffusant comportant une première face de couplage (110) apte à recevoir des rayons lumineux émis par la première source lumineuse (10),
c. un premier capot (12) définissant un logement (120) dans lequel est agencée la première platine (100) et comportant un orifice (1210) au travers duquel passe le guide de lumière (11),
d. un premier organe de concentration (13) disposé en vis-à-vis de la première source lumineuse (10) et comportant une portion de concentration (130) agencée pour concentrer les rayons lumineux émis par la première source lumineuse (10) en direction de la première face de couplage (110) du guide de lumière (11), et une cloison (131) s'étendant dans le logement (120) entre la portion de concentration (130) et le premier capot (12), le premier organe de concentration (13) formant une pièce unique.

2. Module optique (1) selon la revendication précédente, dans lequel le premier capot (12) comporte un ensemble de parois latérales (122) jointes entre elles par une paroi supérieure (121) dans laquelle est ménagé ledit orifice (1210), lesdites parois latérales (122) et supérieure (121) définissant le logement (120), **caractérisé en ce que** la cloison (131) s'étend dans le logement (120) en étant jointive avec chacune des parois latérales (122).

3. Module optique (1) selon la revendication précédente, dans lequel le premier organe de concentration (13) est réalisé en silicone.

4. Module optique (1) selon l'une des revendications précédentes, dans lequel le guide de lumière (11) diffusant comporte un cœur (111) entouré d'une gaine (112), le cœur (111) et la gaine (112) étant agencés pour que des rayons lumineux pénétrant dans le guide de lumière (11) diffusant par la première face de couplage (110) se propagent dans le cœur (111) par réflexion totale interne sur un dioptre (113) formé par le cœur (111) et la gaine (112) ; et une pluralité d'organes de diffusion (114) agencés pour diffuser les rayons lumineux se propageant dans le cœur (111) vers l'extérieur de la gaine (112).

5. Module optique (1) selon l'une des revendications précédentes, **caractérisé en ce que** la portion de concentration (130) est une portion présentant une face d'entrée (1300) agencée en vis-à-vis de la première source lumineuse (10) et une zone de jonction (1301) avec la cloison (131), ladite portion (130) s'évasant depuis la face d'entrée (1300) vers la zone de jonction (1301).

6. Module optique (1) selon l'une des revendications précédentes, **caractérisé en ce que** le premier organe de concentration (13) comporte une portion de couplage (132) s'étendant dans le logement (120) entre la cloison (131) et la première face de couplage (110) du guide de lumière (11), la portion de couplage (132) étant agencée pour dévier les rayons lumineux issus de la portion de concentration (130) vers la première face de couplage (110) du guide de lumière (11).

7. Module optique (1) selon la revendication précédente, **caractérisé en ce que** la portion de couplage (132) est une portion présentant une zone de jonction (1320) avec la cloison (131) et une face de sortie (1321) agencée en vis-à-vis de la première face de couplage (110) du guide de lumière (11), ladite portion (132) présentant une forme sensiblement cylindrique.

8. Module optique (1) selon l'une des revendications précédentes, **caractérisé en ce que** la cloison (131) du premier organe de concentration (13) comporte au moins un élément de positionnement (1310) et **en ce que** la première platine (100) comporte un premier élément de positionnement complémentaire (1001) agencé pour coopérer avec l'élément de positionnement (1310) de sorte que la première source lumineuse (10) soit positionnée en vis-à-vis de la portion de concentration (130).

9. Module optique (1) selon l'une des revendications précédentes, **caractérisé en ce qu'**il comporte un premier dissipateur de chaleur (14) sur lequel est montée ladite première platine (100), le premier dissipateur (14) étant fixé au premier capot (12) en étant agencé pour fermer le logement (120).

10. Module optique (1) selon la revendication précédente, lorsqu'elle dépend de la revendication 8, dans lequel le premier dissipateur de chaleur (14) comporte un deuxième élément de positionnement complémentaire (140) venant en vis-à-vis du premier élément de positionnement complémentaire (1001) de la première platine (100) et agencé pour coopérer avec l'élément de positionnement de la cloison (131).

11. Module optique (1) selon l'une des revendications précédentes, **caractérisé en ce qu'**il comporte une deuxième source lumineuse (10.1) montée sur une deuxième platine (100.1), **en ce que** le guide de lumière (11) diffusant comporte une deuxième face de couplage (110.1) apte à recevoir des rayons lumineux émis par la deuxième source lumineuse (10.1), **en ce qu'**il comporte un deuxième capot (12.1) définissant un logement (120) dans lequel est agencée la deuxième platine (100.1) et comportant un orifice (1210.1) au travers duquel passe le guide de lumière (11) et **en ce qu'**il comporte un deuxième organe de concentration (13.1) disposé en vis-à-vis de la deuxième source lumineuse (10.1) et comportant une portion de concentration (130.1) agencée pour concentrer les rayons lumineux émis par la deuxième source lumineuse (10.1) en direction de la deuxième face de couplage (110.1) du guide de lumière (11), et une cloison (131.1) s'étendant dans le logement (120.1) du deuxième capot (12.1) entre la portion de concentration (130.1) du deuxième organe de concentration (13.1) et le deuxième capot (12.1), le deuxième organe de concentration (13.1) formant une pièce unique.

12. Dispositif lumineux d'un véhicule automobile comportant au moins un module optique (1) selon l'une des revendications précédentes.
